# EUROPEAN PATENT APPLICATION

(11) **EP 4 303 186 A1**
(43) Date of publication of application: **10.01.2024**
(21) Application number: 22183670.3
(22) Date of filing: 07.07.2022
(51) Int. Cl.: C01C 1/04, C25B 1/04

(54) **PROCESS FOR PRODUCING AMMONIA**

(71) Applicant: CASALE SA, 6900 Lugano (CH)
(72) Inventor: GALIMBERTI, Leonardo Angelo, 22013 Vercana (CO) (IT); PANZA, Sergio, 22100 Como (IT); BARATTO, Francesco, 22100 Como (IT); GENOVA, Giovanni, 22100 Como (IT)
(74) Representative: M. Zardi & Co S.A.

(57) **Abstract**

A process for producing ammonia (2) in an ammonia synthesis converter (19) with co-production of steam (40) from the recovery of process heat generated in the synthesis converter, the process includes producing power (44) from expansion of said steam (40) in a steam turbine (42) which is mechanically coupled to a reversible motor/generator (43) and to a compressor so to form an assembly which can be selectively operated in a first mode of operation and in a second mode of operation wherein: in said first mode, mechanical power (44) is transferred from said steam turbine (42) to said reversible motor/generator (43) and to said compressor whilst in said second mode, mechanical power (44) is transferred to said compressor from said steam turbine (42) and from said reversible motor/generator.

## Description

### Field of application

The invention is in the field of ammonia synthesis. The invention particularly pertains to a process and a method for controlling an ammonia plant subjected to fluctuating production of steam.

### Prior art

Ammonia is synthesized by reacting a makeup gas comprising hydrogen and nitrogen in a catalytic converter to generate a gaseous effluent containing ammonia which after cooling and condensation is separated into a liquid ammonia product.

Typically the cooling of the gaseous effluent of the catalytic converter is carried in a shell and tube heat exchanger wherein the gaseous effluent is cooled by indirect heat transfer with water to produce a cooled gas and steam. On the contrary the condensation of ammonia is carried out in a suitable condensation section which includes a refrigerator system provided with a gas compressor.

Overall, the steam produced during the coolant can be advantageously used in the ammonia plant as a driving force for the utility machines e.g. to run the makeup gas compressor or the circulator of the catalytic converter. In some plants steam can also be used to drive a steam turbine generator which typically includes a steam turbine which is mechanically coupled to an alternator for producing electrical energy.

Unfortunately the production of steam is not constant over time especially in ammonia plants that exploit renewable energy to produce hydrogen and to fulfil the energy demand of the plant. In practice, during operation, a fluctuating production of steam is observed which is the result of the inherently timedependency availability of renewable sources which forces the plants to operate in a very short timeframe under peak and shortage of renewable power.

In particular during shortage of renewable power the plants may be forced to operate at a reduced capacity which results in a low production of ammonia and in a low generation of steam. When the steam produced is lower than a threshold value it cannot be used to run the utility machines of the plants and in most of the cases it must be condensed leading to an obvious waste of energy.

On the contrary during peaks in renewable power production an extra production of steam can be obtained. In conventional ammonia plants this is not an issue because the steam balance of the plants can be adjusted relying on external auxiliary boilers fed with fossil fuels and by exporting the extra production of steam to other processes. On the contrary in green ammonia plants is crucial to have a closed steam balance because auxiliary boilers are frequently not provided and in the majority of cases there is no demand for steam outside the process and in some instances it is even not feasible to export it. As a consequence, said extra production of steam is again wasted.

Therefore, in light of the consideration stated above is highly desirable to provide a process and a method to control and exploit in an efficient way the fluctuating production of steam.

### Summary of the invention

The invention aims to overcome the above drawbacks of the prior art. In particular, the present invention aims to deal with the fluctuating production of steam in ammonia plants which are powered by renewable energy sources.

The invention is based on the judicious insight that an assembly comprising a steam turbine, a compressor and a reversible motor/generator can be effectively used to accommodate overproduction and underproduction of steam which can result in an excess or shortage of mechanical power in the plant.

Accordingly, one aspect of the present invention is a process for producing ammonia according to claim 1.

The process comprises producing ammonia in an ammonia synthesis converter and producing steam from the recovery of process heat generated in said ammonia synthesis converter.

The process further includes producing power from the expansion of said steam in a steam turbine which is mechanically coupled to a reversible motor/generator and to a compressor to form an assembly. The assembly can be selectively operated in a first mode of operation and in a second mode of operation as a function of the steam produced from the recovery of process heat and as function of the power consumed by the compressor.

In details in said first mode mechanical power is transferred from said steam turbine to said reversible motor/generator acting as a generator and to said compressor whilst in said second mode of operation mechanical power is transferred to said compressor from said steam turbine and from said reversible motor/generator acting as a motor.

Said first mode of operation is selected when the power obtainable from the expansion of said steam in the steam turbine is greater than the power consumed by said compressor, whilst said second mode of operation is selected when the power obtainable from expansion of said steam in said steam turbine is less than the power required by said compressor.

Another aspect of the invention is a method for controlling an ammonia plant according to the claims. A further aspect of the invention is a plant for the synthesis of ammonia according to the claims.

The invention has the following advantages:
The invention allows dealing with intermitted availability of renewable energy sources which results in a fluctuating production of steam.

The invention provides a more flexible way to operate and to control an ammonia plant. In particular when the amount of mechanical power generated from the expansion of steam in said turbine is in excess over the power demand of the compressor of the assembly, said excess of power can be exploited to produce electricity with the generator.

On the contrary when the amount of mechanical power produced in the steam turbine is not sufficient to fulfil the power demand of the compressor, additional mechanical power can be provided via the electrical motor.

A further advantage can be envisaged during the startup of the plant because the mechanical power required to start up the compressor can be provided entirely by the motor of the assembly and no dedicated steam generator or steam boiler are required to generate additional steam and additional mechanical power.

Further all the steam produced in the plant can be used within the plant and no net steam export or steam condensation is carried out.

In addition, a smooth operation during transient conditions of the plant can be obtained since the reversible motor/generator support the power balance.

### Detailed description of the invention

The process of the invention comprises the following steps: producing an ammonia make-up gas including hydrogen from a renewable energy source and reacting said make-up gas to form ammonia in an ammonia synthesis converter, producing steam from the recovery of process heat generated during exothermic reaction of said make-up gas and producing power from expansion of said steam.

The expansion of steam is performed in a steam turbine which is mechanically coupled to a reversible motor/generator and to a compressor. The steam turbine, the reversible motor/generator and the compressor form an assembly which can operate selectively in a first mode of operation and in a second mode of operation.

In the first mode of operation mechanical power is transferred from said steam turbine to said reversible motor/generator and to said compressor, said reversible motor/generator acting as a generator driven by the steam turbine.

In the second mode of operation mechanical power is transferred to said compressor from said steam turbine and from said reversible motor/generator accordingly said reversible motor/generator acts as a motor to drive the compressor.

The process further includes selecting the first mode of operation or the second mode of operation as a function of the steam produced from the recovery of said process heat and as a function of the power required by said compressor.

In particular the first mode of operation is selected when the power obtainable from expansion of said steam in said steam turbine is greater than the power required by said compressor. On the contrary, said second mode of operation is selected when the power obtainable from expansion of said steam in said steam turbine is less than the power required by said compressor.

According to a particularly interesting application of the invention, the hydrogen in the ammonia make-up gas is partially or fully produced by electrolysis of water. To this purpose, a water electrolyzer powered by renewable energy sources is preferably used.

The process may further comprise the steps of withdrawing a portion of the hydrogen produced from a renewable energy source, compressing said portion of hydrogen in a H₂ compressor to obtain a compressed H₂ gas and storing said compressed H₂ gas in a hydrogen storage tank. Advantageously when the hydrogen produced from renewable energy sources is in excess over the amount hydrogen required for the production of the makeup gas said excess of hydrogen can be stored after compression in a storage tank and used when needed for further production of said gas. In a particular preferred application said compressed hydrogen can be used to produce make up gas when there is low to none availability of renewable energy sources.

The compressor part of the assembly with the steam turbine and the reversible motor/generator is preferably one of the following: a compressor arranged to raise the pressure of the make-up gas from a pressure at which the make-up gas is produced to an ammonia synthesis pressure, a compressor arranged to maintain circulation of gas in said ammonia synthesis converter, a compressor of a refrigeration system arranged to cool a gaseous effluent of said ammonia synthesis converter, the H₂ compressor arranged to raise the pressure of the portion of hydrogen which is withdrawn from the main portion of hydrogen produced from a renewable energy source.

Preferably the compressor arranged to raise the pressure of the make-up gas and the compressor arranged to maintain the circulation of gas in said ammonia synthesis converter are two separate units. However, according to an alternative embodiment of the invention, the compressor arranged to raise the pressure of the make-up gas and the compressor arranged to maintain the circulation of gas in said ammonia synthesis converter are part of a single-geared unit which is configured to receive mechanical power from said steam turbine and/or from said reversible motor/generator.

Preferably in said first mode of operation said reversible motor/generator produces electric power which can be exported outside the process or alternatively it can be exploited within the plant. Advantageously all the steam produced in the process can be exploited to generate mechanical power via the steam turbine or electrical energy via the motor of the assembly which receives the mechanical power generated in the steam turbine.

According to the invention steam is generated by recovering the process heat generated by the exothermic conversion of the makeup gas into ammonia.

Preferably said steam is produced by cooling said gaseous effluent of said ammonia synthesis converter and/or by directly cooling said catalyst contained in said ammonia synthesis converter.

Particularly preferably during operation all the steam which is directed to the steam turbine is entirely produced by recovery of the process heat in the converter and no further steam is added to the latter.

The process of the invention can also include a mode of operation wherein the power produced by said steam turbine is fully balanced by the power absorbed by said compressor. Accordingly, the steam produced by the recovery of the process heat is used to generate mechanical power which is entirely transferred to the compressor of the assembly, no extra production of mechanical power is needed.

Preferably the steam generated by the recovery of the process heat is superheated steam.

The invention also discloses a method for controlling an ammonia plant wherein the plant comprises a front-end configured to produce an ammonia make-up gas including hydrogen from a renewable energy source and an ammonia synthesis section arranged to produce ammonia from catalytic conversion of said make-up gas.

The plant further comprises a steam system configured to produce steam from the recovery of process heat generated during said conversion of make-up gas and to produce power from the expansion of said steam.

The steam system includes a steam turbine which is part of an assembly including said steam turbine, a reversible motor/generator and at least one compressor, said reversible motor/generator and said compressor being mechanically coupled to said steam turbine. Said turbine, motor/generator and compressor may be mounted on a common shaft. In some embodiments a gearbox can be provided between the compressor and the motor/generator. It can be noted that the turbine and the motor/generator can operate as drivers of the compressor. The motor/generator however can also operate as a generator driven by the turbine.

The motor/generator is connected to a grid so that when the motor/generator acts as a motor (i.e. additional driver for the compressor), it uses electric energy from the grid. When acting as a generator (driven by the turbine), it may export the produced energy to the grid. In some embodiments the electric energy produced by said generator may be used internally in the process. For instance, in chemical plants which are isolated from the electrical grid and are provided with rechargeable batteries, the electrical energy produced in the plant can be used to recharge the batteries.

The method for controlling the plant includes to control said turbine, said reversible motor/generator and said compressor selectively in a first mode of operation and in a second mode of operation.

In said first mode of operation mechanical power is transferred from said steam turbine to said reversible motor/generator and to said compressor. In said first mode of operation said reversible motor/generator acts as a generator driven by said steam turbine.

In said second mode of operation mechanical power is transferred to said compressor from said steam turbine and from said reversible motor/generator, said reversible motor/generator acts as a motor driving the compressor.

The method includes selecting the first mode of operation or the second mode of operation as a function of the steam produced by the recovery of process heat and as a function of the power required by the compressor of the assembly.

The first mode of operation is selected when the power obtainable from expansion of said steam in said steam turbine is greater than the power required by said compressor.

The second mode of operation is selected when the power obtainable from expansion of said steam in said steam turbine is less than the power required by the compressor.

According to a preferred embodiment said reversible motor/generator is used as a motor to drive the compressor during start-up.

The invention also discloses a plant for the synthesis of ammonia comprising: a front end for the generation of a makeup gas which is at least in part powered by renewable energy sources and a compressor for the make-up gas, an ammonia synthesis section which comprises a compressor acting as a circulator for the makeup gas and an ammonia synthesis converter for generating a gaseous effluent containing ammonia.

The plant further includes: a heat recovery section including a steam system which is configured to cool down said gaseous effluent containing ammonia and to generate steam, a condensation section comprising a refrigeration system which includes a gas compressor of the refrigerator system and an assembly comprising a steam turbine, a reversible motor/generator and at least one compressor, said reversible motor/generator and said compressor being mechanically coupled to said steam turbine.

In an interesting application of the invention the plant further comprises a buffering section including a H₂ compressor in fluid communication with the front end of the plant, a hydrogen storage tank in communication with said H₂ compressor and a recycling line arranged to put into fluid communication said hydrogen storage tank with the suction of the makeup gas compressor.

The buffering section can be used to accumulate hydrogen when the latter is produced in excess in the synthesis section and can be exploited to provide said accumulated hydrogen to the synthesis section of the plant when the availability of renewable sources is low to none.

Advantageously the possibility to operate the reversible motor/generator together with the buffering section provides great flexibility in the operation of the plant. In particular intermittent availability of renewable power and fluctuating production of H₂ can be extremely well accommodated.

Preferably said compressor of the assembly is one of: said compressor of the makeup gas, said compressor acting as a circulator for the makeup gas, said compressor of the refrigerator system or said H₂ compressor of the buffering section.

Particularly preferably said front end comprises a water electrolyzer for generating hydrogen which is at least in part powered by renewable energy sources.

The plant preferably comprises a control system configured to control said assembly according to the hereinabove disclosed method.

According to an embodiment, said heat recovery section includes a boiler feed water pre-heater, a waste heat boiler, a steam superheater and a demi-water preheater.

The plant preferably comprises a separation section configured to separate an ammonia product from said gaseous effluent containing ammonia and further includes a recycling line connecting said separation section to the suction of the circulator.

Preferably, said refrigeration system is an ammonia refrigerator system which further includes an ammonia receiver and an ammonia chiller.

### Description of the figures

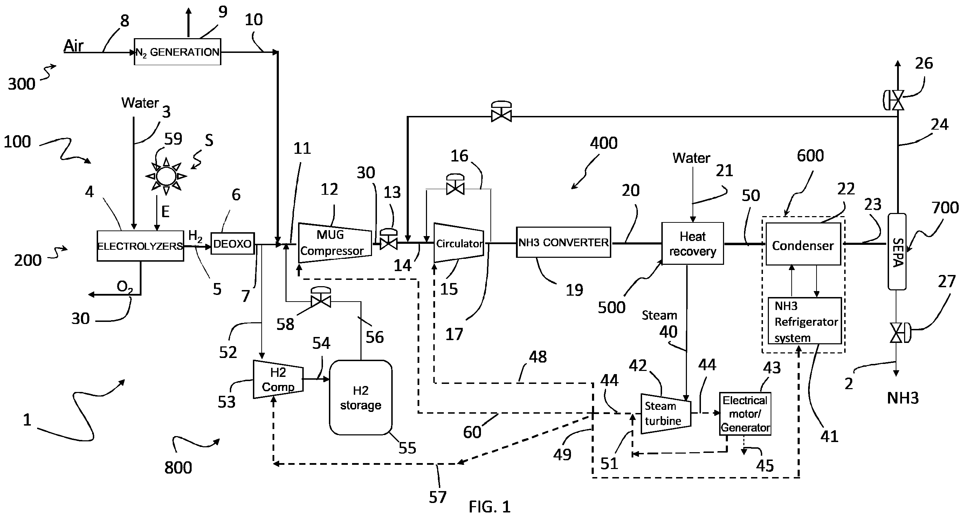

Fig. 1 is a schematic representation of an ammonia plant according to an embodiment of the invention.

### Detailed description of the preferred embodiments

The ammonia plant 1 of Fig. 1 includes a front end 100 for the generation of a makeup gas 11, an ammonia synthesis section 400 for the generation of a gaseous effluent containing ammonia 20, a heat recovery section 500, a condensation section 600, a separation section 700 for separating an ammonia product 2 and a buffering section 800 for the accumulation of hydrogen.

In more details the front end 100 includes a hydrogen generation section 200 for the generation of a hydrogen stream 7, a nitrogen production section 300 for the production of a nitrogen feed 10 and a makeup gas compressor 12.

The hydrogen generation section 200 includes a water electrolyzer 4 for the generation of a hydrogen feed 5 from a water stream 3 with coproduction of oxygen 30. The water electrolyzer 4 is powered by electric power E provided by a renewable source 59 which in Fig. 1 is a solar source S. The solar source S may be for example a photovoltaic field. In other embodiment, the electric power E is obtained from any one of the following: wind power, biomass, hydropower and geothermal power or a mixture thereof.

The hydrogen generation section 200 further includes a deoxygenation unit 6 configured to remove traces of oxygen from the hydrogen feed 5. Output of the deoxygenation unit is the hydrogen stream 7.

The nitrogen production section 300 includes a nitrogen generation unit 9 for the extraction of nitrogen 10 from an air feed 8. Said nitrogen generation unit 9 can be an air separation unit (ASU) that also produces oxygen or oxygen-enriched air.

The buffering section 800 is used to accumulate a portion 52 of the hydrogen 7 produced in said front end 100 and said section comprises an H₂ compressor 53 in fluid communication with the front end 100, a hydrogen storage tank 55 in communication with said H₂ compressor 53 and a recycling line 56 arranged to put into fluid communication said hydrogen storage tank 55 with the suction of the makeup gas compressor 12.

In practice the portion 52 of the hydrogen stream 7 is compressed in the H₂ compressor 53 to obtain a compressed hydrogen gas 54 which is then stored in the hydrogen storage tank 55. Preferably, the compressed hydrogen 54 is supplied to the suction of the compressor 12 during low to none availability of renewable energy sources. The amount of hydrogen fed to the suction of the compressor 12 is regulated via valve 58.

In figure it can be appreciated that the hydrogen stream 7 and the nitrogen feed 10 are mixed together to yield a makeup gas 11 that is delivered to the ammonia synthesis section 400 via the make-up gas compressor 12 and via a circulator 15. Effluent of the make-up gas compressor 12 is a compressed makeup gas 30. A valve 13 is arranged downstream of the makeup gas compressor 12 and upstream of the ammonia synthesis section 400 to regulate the flow of compressed makeup gas 30 delivered to ammonia synthesis section 400.

The ammonia synthesis section 400 includes an ammonia converter 19 and the circulator 15 which is equipped with a bypass line 16. The circulator 15 receives the compressed make-up gas 30 effluent of the compressor 12 and it also receives a tail gas 24 effluent of the separation section 700. In the embodiment of Fig. 1 the tail gas 24 and the compressed make-up gas 30 are mixed together at the discharge of the compressor 12 to yield a mixed stream 14 before being supplied to the circulator 15.

Effluent of the circulator 15 is a reagent gas feed 17 that is conveyed to the ammonia converter 19. The ammonia converter 19 includes one or more reactive zone(s) e.g. one or more catalytic bed(s).

The bypass line 16 can be used to recycle a portion of the reagent gas feed 17 of the circulator 15 to keep the operating pressure of the ammonia converter 19 within a pre-established range during partial load events cause for instance by a shortage of renewable power. To this purpose the system disclosed in WO 2021/089276 can be used.

In the ammonia converter 19 the reagent gas feed 17 is reacted over a suitable catalyst to form a gaseous effluent 20 containing ammonia. The gaseous effluent 20 containing ammonia is then indirectly cooled in the heat recovery section 500 to generate a cooled gas 50 and steam 40. The heat recovery section is supplied with water 21 that after recovery heat from the gaseous effluent 20 is transformed into said steam 40.

The cooled gas 50 effluent of the heat recovery section is conveyed to a condensation section 600 which includes a condenser 22 and ammonia refrigerator system 41.

The ammonia refrigerator system 41 is used to remove heat in the condenser 22 using ammonia as a coolant. The ammonia refrigeration system is of standard design and it includes an ammonia compressor, an ammonia receiver and a cooler.

The effluent of the condenser is a condensed stream 23 which is separated in the ammonia separation section 700 into an ammonia product 2 and into a tail gas 24. Preferably, the tail gas 24 is entirely recycled back to the suction of the circulator 15. Alternatively, it is also possible to envisage an embodiment wherein the majority of the tail gas is recycled back to the suction of the circulator 15 and a portion of said tail gas 24 is discharged outside the plant 1 via valve 26. In figure it can be noted that the amount of ammonia 2 withdrawn from the separator 700 is regulated via valve 27.

The plant further includes an assembly which comprises a steam turbine 42, a compressor and a reversible motor/generator 43.

The compressor of the assembly according to the embodiment of Fig. 1 is one of the following: the compressor of the refrigerator system 41, the circulator 15 of the ammonia synthesis section 400, the H₂ compressor of the buffering section 800 or the makeup gas compressor 12.

The reversible motor/generator 43 is configured to act as an electrical motor which converts an electrical input into mechanical power or as a generator which converters motive power (mechanical power) into electric power.

The steam turbine 42 is connected with the heat recovery section 500, the reversible motor/generator 43 and with one of the following: the H₂ compressor 53, the circulator 15, the compressor of the ammonia refrigerator system 41 and the makeup gas compressor 12. Further, the reversible motor/generator 43 is connected with the circulator 15, with the compressor of the ammonia refrigerator system 41, with the H₂ compressor 53 and with the makeup gas compressor 12.

The method of the invention is now explained with reference to Fig. 1

The method comprises switching the operability of the plant between a first mode of operation and a second mode of operation based on the amount of steam 40 produced in said heat recovery section 500 and based on the amount of power 44 required by said compressor of the assembly.

In said first mode of operation said steam 40 is at least in part expanded in said steam turbine 42 to generate mechanical power 44 which is either transferred to the circulator 15 via line 48, to the compressor of the ammonia refrigerator system 41 via line 49, to the H₂ compressor 53 of the buffering section 800 via line 57 or to the makeup gas compressor 12 via line 60. Further, the excess of power which is not used to run the above mentioned compressors is transferred to the reversible motor/generator 43 to generate electric power. The reversible motor/generator in said first mode of operation acts as a motor.

The first mode of operation is selected when the power obtainable from the expansion of said steam 40 in said steam turbine 42 is greater than the power required by one of the above-mentioned compressors of the assembly e.g the circulator.

On the contrary the plant is operated according to a second mode of operation when the power obtainable from expansion of said steam 40 in said steam turbine is less than the power required by said compressor.

In said second mode of operation the mechanical power 44 available from the expansion of said steam in said steam turbine 42 is transferred to the circulator 15 via line 48 or to the compressor of the ammonia refrigerator system 41 via line 49 or to the H₂ compressor 53 via line 57 or to the makeup gas compressor 12 and the balance of mechanical power required to run the compressors is provided with the reversible motor/generator 43 via line 51. In said second mode of operation said reversible motor/generator 43 is operated as a generator.

## Claims

1. Process for producing ammonia (2) comprising:
producing an ammonia make-up gas (11) including hydrogen (5) from a renewable energy source (59) and reacting said make-up gas (11) to form ammonia (2) in an ammonia synthesis converter (19);
producing steam (40) from the recovery of process heat generated during exothermic reaction of said make-up gas (11);
producing power (44) from expansion of said steam (40);
wherein said expansion of steam (40) is performed in a steam turbine (42) which is mechanically coupled to a reversible motor/generator (43) and to at least one compressor;
wherein said turbine, said reversible motor/generator and said compressor form an assembly which can operate selectively in a first mode of operation and in a second mode of operation wherein:
in said first mode, mechanical power (44) is transferred from said steam turbine (42) to said reversible motor/generator (43) and to said compressor, said reversible motor/generator (43) acting as a generator driven by the steam turbine (42);
in said second mode, mechanical power (44) is transferred to said compressor from said steam turbine (42) and from said reversible motor/generator, said reversible motor/generator acting as a motor driving the compressor;
the process including selecting the first mode of operation or the second mode of operation as a function of the steam (40) production and as function of the power required by said compressor, wherein:
when the power obtainable from expansion of said steam (40) in said steam turbine (42) is greater than the power required by said compressor, the first mode of operation is selected, and
when the power obtainable from expansion of said steam (40) in said steam turbine (42) is less than the power required by said compressor, the second mode is selected.

2. Process according to claim 1, wherein said hydrogen (5) in the ammonia make-up gas (11) is partially or fully produced by electrolysis of water (4).

3. Process according to claim 1 or 2, further comprising the steps of withdrawing a portion (52) of the hydrogen (5) produced from said renewable energy source (59), compressing said portion (52) of hydrogen in a H₂ compressor (53) to obtain a compressed H₂ gas (54) and storing said compressed H₂ (54) gas in a hydrogen storage tank (55).

4. Process according to any previous claims, wherein said compressor is one of the following: a compressor (12) arranged to raise the pressure of the makeup gas (11) from a pressure at which the make-up gas (11) is produced to an ammonia synthesis pressure; a compressor (15) arranged to maintain circulation of gas in said ammonia synthesis converter (19); a compressor of a refrigeration system (41) arranged to cool a gaseous effluent of said ammonia synthesis converter (19); the H₂ compressor (53) arranged to raise the pressure of said portion (52) of hydrogen.

5. Process according to any of the previous claims, wherein in said first mode of operation said reversible motor/generator (43) produces electric energy (45) which is exported outside the process.

6. Process according to claim 4 or 5, wherein said steam (40) is produced by cooling said gaseous effluent of said ammonia synthesis converter (19) and/or by directly cooling a catalyst contained in said ammonia synthesis converter (19).

7. Process according to any of the previous claims, wherein during operation said steam (40) directed to the steam turbine (42) is entirely produced by recovery of process heat without additional steam production in a fuel-fired boiler.

8. Process according to any of the previous claims, further including a mode of operation wherein the power produced by said steam turbine (42) is fully balanced by the power absorbed by said compressor.

9. Process according to any of the previous claims, wherein said steam (40) is superheated.

10. Method for controlling an ammonia plant (1), wherein:
said plant (1) comprises a front-end (100) configured to produce an ammonia make-up gas (11) including hydrogen (5) from a renewable energy source (59) and an ammonia synthesis section (400) arranged to produce ammonia (2) from catalytic conversion of said make-up gas (11);
the plant (1) comprises a steam system configured to produce steam (40) from the recovery of process heat generated during said conversion of make-up gas (11) and to produce power (44) from expansion of said steam (40);
wherein said steam system includes a steam turbine (42) which is part of an assembly including said steam turbine (42), a reversible motor/generator (43) and at least one compressor, said reversible motor/generator (43) and said compressor being mechanically coupled to said steam turbine (12);
wherein the method for controlling said plant (1) includes:
controlling said turbine (12), said reversible motor/generator (43) and said compressor selectively in a first mode of operation and in a second mode of operation wherein:
in said first mode of operation, mechanical power (44) is transferred from said steam turbine (42) to said reversible motor/generator (43) and to said compressor, said reversible motor/generator (43) acting as a generator driven by said steam turbine (42);
in said second mode of operation, mechanical power (44) is transferred to said compressor from said steam turbine (42) and from said reversible motor/generator (43), said reversible motor/generator (43) acting as a motor driving the compressor;
the method including selecting the first mode of operation or the second mode of operation as a function of the steam (40) production and as a function of the power required by said compressor, wherein:
when the power obtainable from expansion of said steam (40) in said steam turbine (42) is greater than the power required by said compressor, the first mode of operation is selected, and
when the power (44) obtainable from expansion of said steam (40) in said steam turbine (42) is less than the power required by the compressor, the second mode of operation is selected.

11. Method according to claim 10, wherein said reversible motor/generator (43) is used as a motor to drive the compressor during startup.

12. A plant (1) for the synthesis of ammonia (2) comprising.
a front end (100) for the generation of a makeup gas (11) which is at least in part powered by renewable energy sources (59) and a compressor (12) for the make-up gas (11);
an ammonia synthesis section (400) which comprises a compressor (15) acting as a circulator for the makeup gas (11) and an ammonia synthesis converter (19) for generating a gaseous effluent containing ammonia (20);
a heat recovery section (500) including a steam system which is configured to cool down said gaseous effluent containing ammonia (20) and to generate steam (40);
a condensation section (600) comprising a refrigeration system (41) which includes a gas compressor of the refrigerator system (41);
an assembly comprising a steam turbine (42), a reversible motor/generator (43) and at least one compressor, said reversible motor/generator and said compressor being mechanically coupled to said steam turbine.

13. Plant (1) according to claim 12, further comprising a buffering section (800) comprising a H₂ compressor (53) in fluid communication with the front end (100), a hydrogen storage tank (55) in communication with said H₂ compressor (53) and a recycling line (56) arranged to put into fluid communication said hydrogen storage tank (55) with the compressor (12) of the makeup gas (11).

14. Plant (1) according to claim 12 or 13, wherein said compressor of the assembly is one of: said compressor (12) of the makeup gas (11), said compressor (15) acting as a circulator for the makeup gas (11), said compressor of the refrigerator system (41) or said H₂ compressor (53) of the buffering section (800).

15. Plant according to any previous claims, wherein said front end comprises a water electrolyzer (4) for generation of hydrogen (5) which is at least in part powered by a renewable energy source (59).

16. Plant according to any previous claims, further comprising a control system configured to control said assembly according to the method of claim 10 or 11.

17. Plant according to any previous claims, wherein said heat recovery section (500) includes a boiler feed water pre-heater, a waste heat boiler, a steam superheater and a demiwater preheater.

18. Plant according to any previous claims, further comprising a separation section (700) configured to separate an ammonia product (2) from said gaseous effluent containing ammonia (20) and further including a recycling line (24) connecting said separation section (700) to the suction of the circulator (15).

19. Plant according to any previous claims, wherein said refrigeration system (41) is an ammonia refrigerator system which further includes an ammonia receiver and an ammonia chiller.
